(19) Europäisches Patentamt / European Patent Office / Office européen des brevets

(11) **EP 2 416 055 B1**

(12) **FASCICULE DE BREVET EUROPEEN**

(45) Date de publication et mention
de la délivrance du brevet:
**20.03.2013 Bulletin 2013/12**

(51) Int Cl.:
*F17C 7/00* (2006.01)

(21) Numéro de dépôt: **11174364.7**

(22) Date de dépôt: **18.07.2011**

(54) **Dispositif de sécurité et récipient de gaz pourvu d'un tel dispositif**

Sicherheitsvorrichtung und mit solch einer Vorrichtung ausgestatteter Gasbehälter

Safety device and gas container provided with such a device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.08.2010 FR 1056483**

(43) Date de publication de la demande:
**08.02.2012 Bulletin 2012/06**

(73) Titulaire: **L'AIR LIQUIDE, Société Anonyme pour
l'Etude
et l'Exploitation des Procédés Georges Claude
75007 Paris (FR)**

(72) Inventeurs:
• **Jallais, Simon
92370 CHAVILLE (FR)**
• **Barth, Frédéric
75017 Paris (FR)**
• **Ruban, Sidonie
94260 FRESNES (FR)**

(74) Mandataire: **De Cuenca, Emmanuel Jaime
L'Air Liquide S.A.
Direction Propriété Intellectuelle
75 Quai d'Orsay
75321 Paris Cedex 07 (FR)**

(56) Documents cités:
**FR-A1- 2 951 243    US-A- 2 742 179**

**Description**

La présente invention concerne un dispositif de sécurité pour récipient de gaz, un récipient pourvu d'un tel dispositif et un procédé de mise en oeuvre.

Le document US 2 742 179 décrit un dispositif de sécurité.

L'invention concerne plus particulièrement un dispositif de sécurité formant une soupape de libération d'un gaz sous pression en cas de situation dangereuse, comprenant un corps définissant un canal d'écoulement de gaz dont une extrémité amont est destinée à être mise en contact avec une source de gaz sous pression et au moins une extrémité aval est destinée à être mis en contact avec l'atmosphère extérieure, le dispositif comprenant un bouchon situé sur le canal pour empêcher l'écoulement du gaz entre l'extrémité amont et l'extrémité aval en configuration normale, le bouchon étant fusible et/ou frangible pour libérer le passage pour le gaz en cas de situation dangereuse lorsqu'il est soumis à un pression et/ou une température excédant un seuil déterminé.

Les bouteilles de gaz inflammable, en particulier pour les applications mobiles de l'hydrogène énergie, sont équipées d'un dispositif permettant de vider le contenu gazeux de la bouteille si celle-ci est prise dans un feu et d'éviter ainsi son éclatement. Ceci concerne en particulier les bouteilles composites de type IV.

Un tel dispositif comprend souvent un fusible thermique, c'est-à-dire un eutectique métallique qui doit fondre sous l'action de la température du feu afin de créer une fuite qui vide la bouteille et évite ainsi son éclatement.

Dans de nombreux cas d'incendie, lorsque le fusible libère le gaz (hydrogène notamment), le gaz s'enflamme et crée une flamme de grande longueur (supérieure plusieurs mètres).

Ceci peut provoquer des brûlures pour des personnes adjacentes ou peut même induire des effets en cascade par l'impact de la flamme sur d'autres objets adjacents (d'autres réservoirs de gaz inflammable ou des véhicules adjacents).

Une solution connue consiste à limiter la section de l'orifice rejetant l'hydrogène de façon à limiter la taille de la flamme générée.

Cependant, dans ce cas, le temps de vidange de la bouteille est rallongé et peut augmenter les risques d'éclatement de la bouteille au cours de sa vidange. Ce risque est d'autant plus grand pour les réservoirs de type IV. En effet, le risque d'éclatement n'est en général pas causé uniquement par une augmentation de pression dans la bouteille (puisque celle-ci se vidange) mais aussi et surtout par la fragilisation des matériaux constitutifs de la bouteille par l'action du feu.

Pour résoudre ce problème, des solutions existent pour munir les réservoirs composite (de type IV) de renforts mécaniques extérieurs augmentant leur tenue à l'éclatement. Ces solutions augmentent cependant la masse et le coût des réservoirs.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que l'extrémité aval est en contact avec l'atmosphère extérieure via une pluralité d'orifices espacés les uns des autres et ayant chacun un diamètre compris entre 0,1 et 0,8mm et de préférence un diamètre compris entre 0,2 et 0,6mm et encore plus préférentiellement un diamètre compris entre 0,3 et 0,4mm.

Par ailleurs, des modes de réalisation de l'invention peuvent comporter l'une ou plusieurs des caractéristiques suivantes:

- les orifices en contact avec l'atmosphère sont délimités par des tubes respectifs,
- l'extrémité amont destinée à assurer la communication fluidique entre la source de gaz haute à pression et l'extrémité aval a une section de passage supérieure ou égale à la somme des sections de passage de tous les orifices,
- l'extrémité amont destinée à assurer la communication fluidique entre la source de gaz haute à pression et l'extrémité aval a une section de passage cinq à vingt fois supérieure à la somme des sections de passage de tous les orifices,
- le dispositif comprend n orifices (n entier supérieure à 1), les orifices étant circulaires, l'extrémité amont destinée à assurer la communication fluidique entre la source de gaz haute à pression et l'extrémité aval ayant une section circulaire de diamètre D (en mm), le carré du diamètre de la section de passage de l'extrémité amont étant cinq fois supérieure à la somme des carrés des diamètres de tous les orifices, c'est-à-dire que $D^2 > 5.(d1^2 + ...+dn^2)$ avec di = le diamètre en mm de l'orifice d'ordre i (i=1 à n),
- les orifices sont espacés les uns des autres d'une distance comprise entre 0,1m et 1m et de préférence comprise entre 0,2m et 0,4m,
- le dispositif comprend deux à dix orifices et de préférence trois à six orifices.

L'invention concerne également un récipient de stockage d'un gaz, notamment d'un gaz contenant ou constitué d'hydrogène, le gaz étant stocké à une pression dite haute comprise entre 300 et 800 bar, le récipient comprenant un dispositif de sécurité conforme à l'une quelconque des caractéristiques ci-dessus ou ci-après.

L'invention peut concerner tout dispositif ou procédé alternatif comprenant toute combinaison des caractéristiques ci-dessus ou ci-dessous

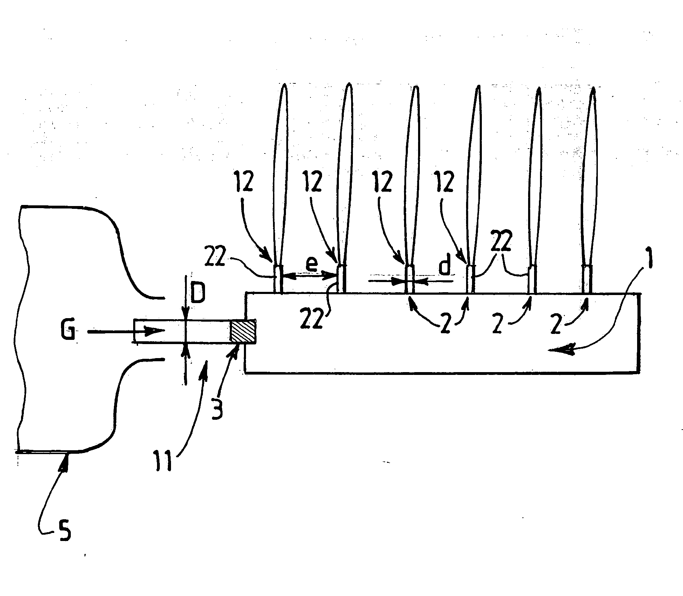

D'autres particularités et avantages apparaîtront à la lecture de la description ci-après, faite en référence à la figure unique, qui représente une vue schématique et partielle illustrant la structure et le fonctionnement d'un dispositif de sécurité selon un exemple de réalisation de l'invention.

Le dispositif de sécurité comprend un corps définissant un canal 1 d'écoulement de gaz dont une extrémité amont 11 communique avec une source de gaz G sous pression et au moins une extrémité aval 12 qui communique avec l'atmosphère extérieure. Au moins un fusible thermique ou bouchon 3 est disposé sur le canal 1 pour empêcher l'écoulement du gaz entre l'extrémité amont 11 et l'extrémité aval 12 en configuration dite normale. Le bouchon 3 est fusible et/ou frangible pour libérer le passage pour le gaz en cas de situation dangereuse lorsqu'il est soumis à un pression et/ou une température excédant un seuil déterminé.

Selon une particularité avantageuse du dispositif, l'extrémité aval 12 est en contact avec l'atmosphère extérieure via une pluralité d'orifices 2 espacés les uns des autres. En cas d'ouverture du bouchon 3, le débit de gaz libéré dans le canal est évacué vers l'extérieur via la pluralité d'orifices 2. C'est-à-dire que le débit de gaz évacué est réparti en plusieurs sorties ayant des débits d'évacuation limités.

Par exemple, chacun des orifices 2 a un diamètre compris entre 0,1 et 0,8mm et de préférence un diamètre compris entre 0,2 et 0,6mm et encore plus préférentiellement un diamètre compris entre 0,3 et 0,4mm.

Les orifices 2 peuvent par exemple être délimités par des tubes 22 d'évacuation respectifs.

Le diamètre d de passage de l'orifice 2 (tubes 22) peut être choisi de façon à limiter la longueur de flamme maximale susceptible de se former à la sortie de l'orifice. De préférence, on pourra limiter la taille de l'orifice 2 pour générer des flammes de longueur inférieure à 1 ou 2 mètre et de préférence inférieure à 1 m.

La longueur de flamme Lf à la sortie de l'orifice 2 peut être calculée en utilisant par exemple la formule suivante:

$$Lf/d = 400.P^{0,5}$$

avec

P = la pression du gaz G qui doit être libéré (en MPa),

d = le diamètre de la section de l'orifice (en mm)

Lf = la longueur de flamme (en m).

Cette répartition de l'évacuation du gaz par plusieurs orifices 2 permet à la fois de limiter la longueur de flamme et de réaliser une vidange de la bouteille dans une durée compatible avec le temps de résistance des matériaux constitutifs de la bouteille dans un incendie.

Ainsi, par exemple, pour limiter les flammes à une longueur d'un mètre, on préfèrera des orifices de diamètre d de 0,3 mm.

De préférence, l'espacement entre les orifices 2 ou tubes 22 est de 15 à 30% de la longueur de flamme obtenue.

L'espacement entre les orifices 2 ou tubes 22 est de préférence de 20% de la longueur de flamme cible calculée ci-dessus. Ceci limitera les risques de jonctions entre les flammes adjacentes.

Le débit rejeté par les multiples orifices (somme des sections des orifices) est en théorie identique à celui obtenu par un seul orifice ayant la même surface équivalente. La durée de vidange est donc théoriquement la même.

Cependant, en pratique, on peut considérer plus raisonnablement que le coefficient de débit d'un orifice de taille relativement petite est de 25 à 50 % plus faible que celui d'un orifice de taille relativement plus grande. C'est-à-dire que, « l'efficacité » de l'écoulement est moindre pour un orifice plus petit.

Ainsi, dans ce cas, le débit rejeté par la pluralité des orifices 2 peut être de l'ordre de ¾ à ½ du débit qui aurait été rejeté par un seul grand orifice de section équivalente. Ceci peut donc augmenter la durée de vidange de 25 à 50 %. Cependant, le caractère modulaire de la présente structure permet de choisir de façon exacte la longueur de flamme et le temps de vidange en jouant sur le débit de fuite et le nombre d'orifices 2.

Bien entendu, il est préférable que le diamètre D ou la section de passage en amont 11 des orifices 2 ne soit pas limitant pour le débit évacué par les orifices 2. C'est-à-dire que le débit de gaz en amont des orifices 2 doit être suffisamment grand (de préférence supérieur à la somme des débits par les orifices 2).

Le débit M de gaz en g/sec sortant d'un orifice 2 peut par exemple être exprimé selon la formule simplifiée suivante:

$$M\,(g/sec) = 0,04915.Cd.d^2\,.P$$

Cd = le coefficient de débit de l'orifice (sans dimension)

d = le diamètre de l'orifice 2 (en mm)

P = la pression du gaz sortant (en bar)

**Revendications**

1. Dispositif de sécurité formant une soupape de libération d'un gaz sous pression en cas de situation dangereuse, comprenant un corps définissant un canal (1) d'écoulement de gaz dont une extrémité amont (11) est destinée à être mise en contact avec une source de gaz (G) sous pression et au moins une extrémité aval (12) est destinée à être mis en contact avec l'atmosphère extérieure, le dispositif comprenant un bouchon (3) situé sur le canal (1) pour empêcher l'écoulement du gaz entre l'extrémité amont (11) et l'extrémité aval (12) en configuration normale, le bouchon (3) étant fusible et/ou frangible pour libérer le passage pour le gaz en cas de situation dangereuse lorsqu'il est soumis à un pression et/oud une température excédant un seuil déterminé, dans lequel l'extrémité aval (12) est en contact avec l'atmosphère extérieure via une pluralité d'orifices (2) espacés les uns des autres, **caractérisé en ce que** chacun des orifices a un diamètre compris entre 0,1 et 0,8mm et de préférence un diamètre compris entre 0,2 et 0,6mm et encore plus préférentiellement un diamètre compris entre 0,3 et 0,4mm.

**2.** Dispositif selon la revendication 1, **caractérisé en ce que** les orifices (2) en contact avec l'atmosphère sont délimités par des tubes (22) respectifs.

**3.** Dispositif selon la revendication 1 ou 2, **caractérisé en ce que** l'extrémité amont (11) destinée à assurer la communication fluidique entre la source de gaz haute à pression (G) et l'extrémité aval (12) a une section de passage supérieure ou égale à la somme des sections de passage de tous les orifices (2).

**4.** Dispositif selon la revendication 3, **caractérisé en ce que** l'extrémité amont (11) destinée à assurer la communication fluidique entre la source de gaz haute à pression (G) et l'extrémité aval (12) a une section de passage cinq à vingt fois supérieure à la somme des sections de passage de tous les orifices (2).

**5.** Dispositif selon la revendication 3, **caractérisé en ce qu'**il comprend n orifices (2) (n entier supérieure à 1), les orifices (2) étant circulaires, l'extrémité amont (11) destinée à assurer la communication fluidique entre la source de gaz haute à pression (G) et l'extrémité aval (12) ayant une section circulaire de diamètre D (en mm), et **en ce que** le carré du diamètre de la section de passage de l'extrémité amont (11) est cinq fois supérieure à la somme des carrés des diamètres de tous les orifices (2), c'est-à-dire que:

$$D^2 > 5.(d1^2 + \ldots + dn^2)$$

avec di = le diamètre en mm de l'orifice d'ordre i (i=1 à n).

**6.** Dispositif selon l'une quelconque des revendications 1 à 5, **caractérisé en ce que** les orifices (2) sont espacés les uns des autres d'une distance comprise entre 0,1m et 1m et de préférence comprise entre 0,2m et 0,4m.

**7.** Dispositif selon l'une quelconque des revendications 1 à 6, **caractérisé en ce qu'**il comprend deux à dix orifices (2) et de préférence trois à six orifices (2).

**8.** Dispositif selon l'une quelconque des revendications 1 à 7, **caractérisé en ce que** le bouchon est disposé au niveau de l'extrémité amont (11) du canal, c'est-à-dire en amont de la pluralité des orifices (2).

**9.** Récipient de stockage d'un gaz, notamment d'un gaz contenant ou constitué d'hydrogène, le gaz étant stocké à une pression (P) dite haute comprise entre 300 et 800 bar, **caractérisé en ce que** le récipient (5) comprend un dispositif de sécurité conforme à l'une quelconque des revendications 1 à 8.

**Claims**

**1.** Safety device which forms a valve for releasing a pressurised gas in the event of a hazardous situation, comprising a body which defines a gas-flow channel (1), of which an upstream end (11) is intended to be put into contact with a pressurised-gas (G) source and at least one downstream end (12) is intended to be put into contact with the external atmosphere, the device comprising a plug (3) located on the channel (1) so as to prevent gas flow between the upstream end (11) and the downstream end (12) in the standard configuration, the plug (3) being fusible and/or frangible so as to make the passage clear for the gas in the event of a hazardous situation in which it is subjected to pressure and/or a temperature exceeding a determined threshold, the downstream end (12) being in contact with the external atmosphere via a plurality of orifices (2) which are spaced apart from one another, **characterised in that** each of the orifices has a diameter of between 0.1 and 0.8 mm, preferably a diameter of between 0.2 and 0.6 mm and more preferably a diameter of between 0.3 and 0.4 mm.

**2.** Device according to claim 1, **characterised in that** the orifices (2) in contact with the atmosphere are delimited by corresponding tubes (22).

**3.** Device according to either claim 1 or claim 2, **characterised in that** the upstream end (11) intended to ensure fluid communication between the high-pressure gas (G) source and the downstream end (12) has a passage cross-section which is greater than or equal to the sum of the passage cross-sections of all the orifices (2).

**4.** Device according to claim 3, **characterised in that** the upstream end (11) intended to ensure fluid communication between the high-pressure gas (G) source and the downstream end (12) has a passage cross-section which is five to twenty times greater than the sum of the passage cross-sections of all the orifices (2).

5. Device according to claim 3, **characterised in that** it comprises n orifices (2) (n being an integer greater than 1), the orifices (2) being circular, the upstream end (11) intended to ensure fluid communication between the high-pressure gas (G) source and the downstream end (12) having a circular cross-section of diameter D (in mm), and **in that** the square of the diameter of the passage cross-section of the upstream end (11) is five times greater than the sum of the squares of the diameters of all the orifices (2), which is to say that:

$$D^2 > 5.(d1^2 + \ldots + dn^2)$$

with di = the diameter in mm of the orifice of magnitude i (i = 1 to n).

6. Device according to any of claims 1 to 5, **characterised in that** the orifices (2) are spaced apart from one another by a distance of between 0.1 m and 1 m and preferably of between 0.2 m and 0.4 m.

7. Device according to any of claims 1 to 6, **characterised in that** it comprises two to ten orifices (2) and preferably three to six orifices (2).

8. Device according to any of claims 1 to 7, **characterised in that** the plug is located at the upstream end (11) of the channel, which is to say upstream of the plurality of orifices (2).

9. Vessel for storing a gas, in particular a gas containing or composed of hydrogen, the gas being stored at a so-called high pressure (P) of between 300 and 800 bar, **characterised in that** the vessel (5) comprises a safety device according to any of claims 1 to 8.

**Patentansprüche**

1. Sicherheitsvorrichtung, die ein Ventil zur Freigabe eines unter Druck stehenden Gases bei Gefahrensituation bildet, umfassend einen Körper, der einen Gasströmungskanal (1) bildet, von dem ein stromaufwärts gelegenes Ende (11) dafür bestimmt ist, mit einer Hochdruckgasquelle (G) in Kontakt gebracht zu werden, und mindestens ein stromabwärts gelegenes Ende (12) dafür bestimmt ist, mit der Außenatmosphäre in Kontakt gebracht zu werden, wobei die Vorrichtung einen Stopfen (3) umfasst, der an dem Kanal (1) angeordnet ist, um das Strömen des Gases zwischen dem stromaufwärts gelegenen Ende (11) und dem stromabwärts gelegenen Ende (12) in normaler Konfiguration zu verhindern, wobei der Stopfen (3) schmelzbar und/oder splitterbar ist, um den Durchlass für das Gas bei Gefahrensituation freizugeben, wenn es einem Druck und/oder einer Temperatur ausgesetzt ist, der bzw. die einen bestimmten Schwellwert übersteigt, wobei das stromabwärts gelegene Ende (12) mit der Außenatmosphäre über eine Vielzahl von Öffnungen (2), die voneinander beabstandet sind, in Kontakt ist, **dadurch gekennzeichnet, dass** jede der Öffnungen einen Durchmesser hat, der zwischen 0,1 mm und 0,8 mm beträgt, und vorzugsweise einen Durchmesser, der zwischen 0,2 mm und 0,6 mm beträgt, und weiter vorzugsweise einen Durchmesser, der zwischen 0,3 mm und 0,4 mm beträgt.

2. Vorrichtung nach Anspruch 1, **dadurch gekennzeichnet, dass** die Öffnungen (2) in Kontakt mit der Atmosphäre durch jeweilige Rohrleitungen (22) begrenzt sind.

3. Verfahren nach Anspruch 1 oder 2, **dadurch gekennzeichnet, dass** das stromaufwärts gelegene Ende (11), das dafür bestimmt ist, die Strömungsverbindung zwischen der Hochdruckgasquelle (G) und dem stromabwärts gelegenen Ende (12) sicherzustellen, einen Durchlassquerschnitt hat, der größer oder gleich der Summe der Durchlassquerschnitte aller Öffnungen (2) ist.

4. Vorrichtung nach Anspruch 3, **dadurch gekennzeichnet, dass** das stromaufwärts gelegene Ende (11), das dafür bestimmt ist, die Strömungsverbindung zwischen der Hochdruckgasquelle (G) und dem stromabwärts gelegenen Ende (12) sicherzustellen, einen Durchlassquerschnitt hat, der fünf bis zwanzig Mal größer als die Summe der Durchlassquerschnitte aller Öffnungen (2) ist.

5. Vorrichtung nach Anspruch 3, **dadurch gekennzeichnet, dass** sie n Öffnungen (2) (wobei n eine ganze Zahl größer als 1) umfasst, wobei die Öffnungen (2) kreisförmig sind, wobei das stromaufwärts gelegene Ende (11), das dafür bestimmt ist, die Strömungsverbindung zwischen der Hochdruckgasquelle (G) und dem stromabwärts gelegenen Ende (12) sicherzustellen, einen kreisförmigen Querschnitt mit einem Durchmesser D (in mm) hat, und dass das Quadrat des Durchmessers des Durchlassquerschnitts des stromaufwärts gelegenen Endes (11) fünf Mal größer als die Summe der Quadrate der Durchmesser aller Öffnungen (2) ist, das heißt, dass:

$$D^2 > 5.(d1^2 + \ldots + dn^2)$$

mit di = der Durchmesser in mm der Öffnung der Größe i (i=1 bis n).

**6.** Vorrichtung nach einem der Ansprüche 1 bis 5, **dadurch gekennzeichnet, dass** die Öffnungen (2) voneinander um einen Abstand beabstandet sind, der zwischen 0,1 m und 1 m beträgt und vorzugsweise zwischen 0,2 m und 0,4 m beträgt.

**7.** Vorrichtung nach einem der Ansprüche 1 bis 6, **dadurch gekennzeichnet, dass** sie zwei bis zehn Öffnungen (2) und vorzugsweise drei bis sechs Öffnungen (2) umfasst.

**8.** Vorrichtung nach einem der Ansprüche 1 bis 7, **dadurch gekennzeichnet, dass** der Stopfen im Bereich des stromaufwärts gelegenen Endes (11) des Kanals, das heißt stromaufwärts zu der Vielzahl der Öffnungen (2), angeordnet ist.

**9.** Behälter zur Aufbewahrung eines Gases, insbesondere eines Gases, das Wasserstoff enthält oder aus Wasserstoff besteht, wobei das Gas bei einem so genannten Hochdruck (P) aufbewahrt wird, der zwischen 300 und 800 bar beträgt, **dadurch gekennzeichnet, dass** der Behälter (5) eine Sicherheitsvorrichtung nach einem der Ansprüche 1 bis 8 umfasst.

**EP 2 416 055 B1**

## RÉFÉRENCES CITÉES DANS LA DESCRIPTION

**Documents brevets cités dans la description**

- US 2742179 A